Europäisches Patentamt

European Patent Office

Office européen des brevets

(11) Veröffentlichungsnummer: **0 110 175**
**A2**

# EUROPÄISCHE PATENTANMELDUNG

(21) Anmeldenummer: 83110902.0

(22) Anmeldetag: 02.11.83

(51) Int. Cl.³: **B 62 D 55/10**

(30) Priorität: 29.11.82 US 445319

(43) Veröffentlichungstag der Anmeldung: 13.06.84
Patentblatt 84/24

(84) Benannte Vertragsstaaten: **DE FR GB IT SE**

(71) Anmelder: **DEERE & COMPANY, 1 John Deere Road, Moline Illinois 61265 (US)**

(72) Erfinder: **Smith, Joseph John, 2085 Admiral Street, Dubuque Iowa 52001 (US)**

(74) Vertreter: **Gramm, Werner, Prof. Dipl.-Ing. et al, Patentanwälte Gramm + Lins Theodor-Heuss-Strasse 2, D-3300 Braunschweig (DE)**

(54) Halterung zur Verbindung zwischen einem Gleiskettenrahmen und einem Querträger eines Raupenschleppers.

(57) Es handelt sich um verschiedene Ausführungsformen von mit einem Kugellager versehenen Halterungen zur Erzielung einer universell verschwenkbaren Verbindung zwischen einem Gleiskettenrahmen (10, 12) und einem Querträger (16) eines Raupenschleppers. Die Halterung umfaßt ferner ebene Gleitflächen, die am Gleiskettenrahmen oder am Querträger vorgesehen sind und an ebenen Oberflächen anliegen, die am Kugelsegment oder an der Kugelsegmentpfanne vorgesehen sind, so daß das Querträgerende gegenüber dem Gleiskettenrahmen nach vorn und hinten sowie in seitlicher Richtung relativ verschiebbar ist.

"Halterung zur Verbindung zwischen einem Gleiskettenrahmen und einem Querträger eines Raupenschleppers"

Die Erfindung betrifft eine Halterung zur Verbindung des
einen Endes eines Querträgers eines Raupenschleppers mit
einem Gleiskettenrahmen.

Gleiskettenrahmen von Raupenschleppern erstrecken sich
an gegenüberliegenden Längsseiten des Hauptrahmens des
Raupenschleppers von vorn nach hinten und sind mit dem
Hauptrahmen verschwenkbar verbunden für eine Vertikalverschwenkung um eine Achse, die mit der Achse des am hinteren Ende des Hauptrahmens montierten Antriebskettenrades zusammenfällt. Die vorderen Enden der Gleiskettenrahmen sind durch einen Querträger oder einen Ausgleichsträger miteinander verbunden, der sich quer und unterhalb des Hauptrahmens erstreckt und mittig zwischen seinen Enden am Hauptrahmen angelenkt ist zur Ausführung
einer Verschwenkbewegung um eine Längsachse. Da die Kettenrahmen und der Querträger um verschiedene Achsen verschwenkbar sind, erfordert die Verbindung zwischen den
Gleiskettenrahmen und dem Querträger nicht nur eine

- 2 -

Relativverschwenkung zwischen den Rahmen und dem Querträger,
sondern auch eine Längs- und Querverschiebung der Querträgerenden relativ gegenüber den Gleiskettenrahmen, wenn an der
Halterung Überlastungen vermieden werden sollen.

Die US-Patentschrift 2,988,159 zeigt einen Vorschlag für eine
derartige Längsverschiebung der Querträgerenden gegenüber den
Gleiskettenrahmen. Bei diesem Vorschlag weist der Querträger
zylindrische Enden auf, die längsverschiebbar und drehbar
im Querträger gelagert sind, der seinerseits in sich nach
vorn und hinten erstreckenden zylindrischen Gleitzapfen gehalten ist, die ihrerseits drehbar und axial verschiebbar
in einer am Gleiskettenrahmen befestigten Buchse gelagert
sind. Um eine freie Verschiebung der Querträgerenden sowie
des zylindrischen Lagerzapfens zu gewährleisten, muß letzterer
nahezu exakt senkrecht zur Verschwenkachse des Rahmens und
gleichzeitig parallel zur Verschwenkachse des Querträgers ausgerichtet sein. Diese Konstruktion erfordert somit eine sehr
präzise Ausrichtung des Lagerzapfens und damit enge Fertigungstoleranzen.

Der Erfindung liegt die Aufgabe zugrunde, die eingangs erläuterte Halterung so zu verbessern, daß es zur Erzielung einer
freien Verschiebbarkeit keiner präzisen Ausrichtung der einzelnen Teile bedarf.

Diese Aufgabe wird gemäß der Erfindung durch folgende Merkmale gelöst:

a) am Gleiskettenrahmen sind obere und untere Auflager befestigt, die oberhalb bzw. unterhalb von dem genannten
   Ende des Querträgers liegen;

- 3 -

- 3 -

b) zwischen dem genannten Querträgerende und dem genannten
   oberen und unteren Auflager ist ein Kugelgelenk vorgesehen;

c) zwischen den Auflagern und dem Ende des Querträgers ist
   ein erstes Paar horizontaler ebener Gleitflächen vorgesehen,
   die gegen ein zweites Paar ebener Gleitflächen relativ verschiebbar anliegen.

Diese Halterung ermöglicht eine Relativverschiebung in Längs-
und Querrichtung zwischen dem Gleiskettenrahmen und dem Querträger im Bereich der Halterung.

In einer speziellen Ausführungsform kann das Kugelgelenk eine
obere und untere, einander zugewandte Kugelsegmentpfanne aufweisen, die jeweils am oberen und unteren Auflager befestigt
sind und jweils ein oberes und unteres Kugelsegment aufnehmen,
die mit dem genannten ersten Paar Gleitflächen versehen sind,
während das zweite Paar Gleitflächen an sich gegenüberliegenden Seiten des Querträgerendes angeordnet ist.

Bei dieser Ausführungsform ist es vorteilhaft, wenn die obere
Kugelsegmentpfanne einteilig mit einem Halter ausgebildet ist,
der am oberen Auflager höhenverstellbar befestigt ist. Dadurch
läßt sich der lichte Abstand zwischen den beiden Kugelsegmentpfannen verhindern, so daß sich in einfacher Weise Toleranzen
und Verschleiß kompensieren lassen.

Gemäß einem anderen Lösungsvorschlag kann das zweite Paar
Gleitflächen durch den Boden von sich gegenüberliegenden, im
Querträgerende vorgesehen Ausnehmungen gebildet sein, in
die die Kugelsegmente lose mit einem Abschnitt eintauchen,
der das erste Paar Gleitflächen trägt. Diese Ausführungsform

- 4 -

- 4 -

ist besonders geeignet zur Übertragung seitlicher Kräfte von einem Gleiskettenrahmen über den Hauptrahmen des Raupenschleppers auf den anderen Gleiskettenrahmen. Die genannten Ausnehmungen im Querträgerende können ebenso wie die in diese Ausnehmungen eintauchenden Abschnitte der Kugelsegmente zylindrisch ausgebildet sein, wobei der Durchmesser der Ausnehmungen größer ist als der der genannten Kugelsegmentabschnitte, um eine freie, wenn auch im Ausmaß begrenzte Horizontalverschiebung zwischen Kugelsegment und Querträgerende zu ermöglichen. Wird auf den Gleiskettenrahmen eine seitliche Kraft ausgeübt, die das vordere Ende des Gleiskettenrahmens auszulenken trachtet, dann bringt die Bewegung dieses Rahmens die Kugelsegmente zur Anlage an die seitliche Wandung der Ausnehmungen im Querträger, so daß die genannte Seitenkraft auf den Hauptrahmen und von dort auf den gegenüberliegenden Gleiskettenrahmen übertragen wird.

In einer anderen Ausführungsform kann das Kugelgelenk eine obere und untere, einander zugewandte Kugelsegmentpfanne aufweisen, die mit das zweite Paar Gleitflächen bildenden Lagerflächen gegen das erste Paar Gleitflächen bildende Lagerflächen am oberen und unteren Auflager anliegen und jeweils ein oberes und unteres, fest mit dem Querträgerende verbundenes Kugelsegment aufnehmen.

Bei einer anderen Alternativlösung ist es vorteilhaft, wenn die das erste Paar Gleitflächen bildenden Lagerflächen des oberen und unteren Auflagers durch den Boden jeweils einer Ausnehmung gebildet sind, in die die Kugelsegmentpfannen lose mit einem Abschnitt eintauchen, der das zweite Paar Gleitflächen trägt. Auch hier können die genannten Ausnehmungen ebenso wie die genannten Abschnitte der Kugelsegmentpfannen zylindrisch ausgebildet sein, wobei der Durchmesser der Ausnehmungen etwas größer ist als der der genannten Abschnitte. Dadurch erhalten die Kugelsegmentpfannen eine freie horizontale Verschiebbarkeit gegenüber dem oberen und unteren Auflager, wenn
der Gleiskettenrahmen um seine Querachse verschwenkt wird.
Wirken auf den vorderen Abschnitt des Gleiskettenrahmens seitliche Kräfte ein, dann bewegt sich der Gleiskettenrahmen nur so
weit, bis die genannten zylindrischen Abschnitte an der zylindrischen Innenwandung der Ausnehmungen anliegen und dadurch die
Seitenkräfte über die Hauptrahmen auf den gegenüberliegenden
Gleiskettenrahmen übertragen werden.

Um eine universelle Verschwenkung ohne jede Durchbiegung zu
gewährleisten, ist es zweckmäßig, wenn die Kugelsegmente sowie
die Kugelsegmentpfannen einen gemeinsamen Krümmungsmittelpunkt
aufweisen, der mittig zwischen der Ober- und Unterseite des
Querträgerendes liegt. Diese Lösung gilt für alle vorstehend
genannten Alternativvorschläge.

Alle vorstehend erläuterten Halterungen gemäß der Erfindung
ermöglichen eine universelle Verschwenkung sowie horizontale
Verschiebungen zwischen dem Gleiskettenrahmen und dem einen
Ende seines Querträgers, ohne daß enge Toleranzen für die
Funktionsfähigkeit der Halterung eingehalten werden müssen.

0110175

In der Zeichnung sind einige als Beispiele dienende Ausführungsformen der Erfindung dargestellt. Es zeigen:

Figur 1:     in Draufsicht zwei über einen Querträger miteinander verbundene Gleiskettenrahmen;

Figur 2:     einen Querschnitt durch eine Halterung zwischen einem Gleiskettenrahmen und einem Querträgerende;

Figur 3:     die Darstellung gemäß Figur 2 in Seitenansicht;

Figur 4:     eine abgewandelte Ausführungsform in einer Darstellung gemäß Figur 2;

Figur 5:     die Darstellung gemäß Figur 4 in Seitenansicht;

Figur 6:     in vergrößertem Maßstab ein Detail einer abgewandelten Ausführungsform in einer Darstellung gemäß Figur 2 und

Figur 7:     eine weiterhin abgeänderte Ausführungsform in einer Darstellung gemäß Figur 6.

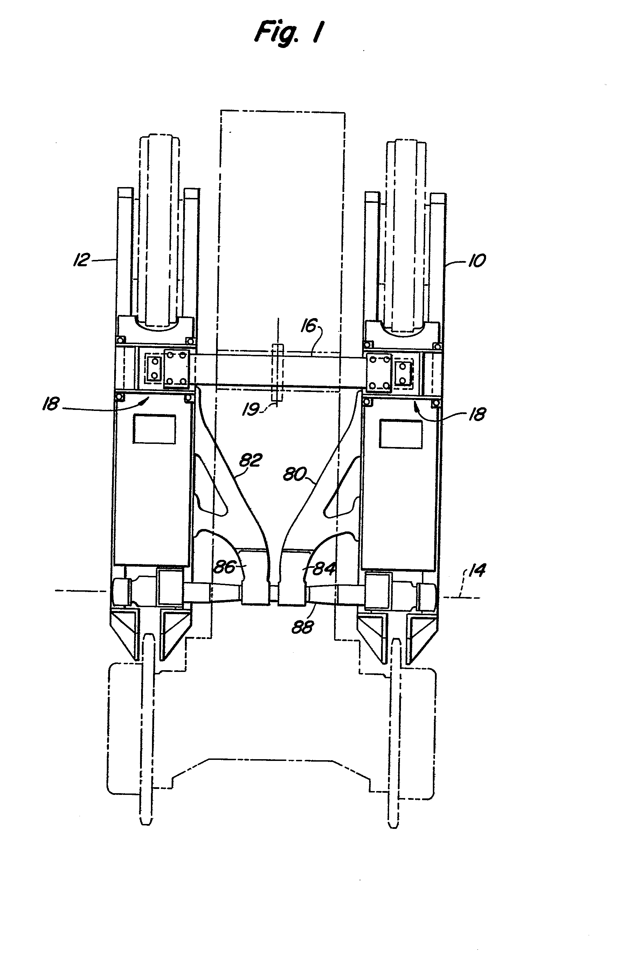

Figur 1 zeigt zwei mit Abstand voneinander angeordnete und sich in Längsrichtung eines Raupenschleppers erstreckende Gleiskettenrahmen 10,12, deren hinteren Enden um eine horizontale

- 7 -

Querachse 14 verschwenkbar sind. Im größeren Abstand von dieser Querachse 14 ist im vorderen Bereich ein Querträger 16
bzw. ein Ausgleichsträger vorgesehen, dessen sich gegenüberliegenden Enden über jeweils eine Halterung 18 mit einem der Gleiskettenrahmen 10,12 verbunden sind. Der Querträger 16 ist mittig zwischen seinen beiden Enden am Hauptrahmen des Raupenschleppers über eine horizontale Längsachse 19 verschwenkbar
angelenkt.

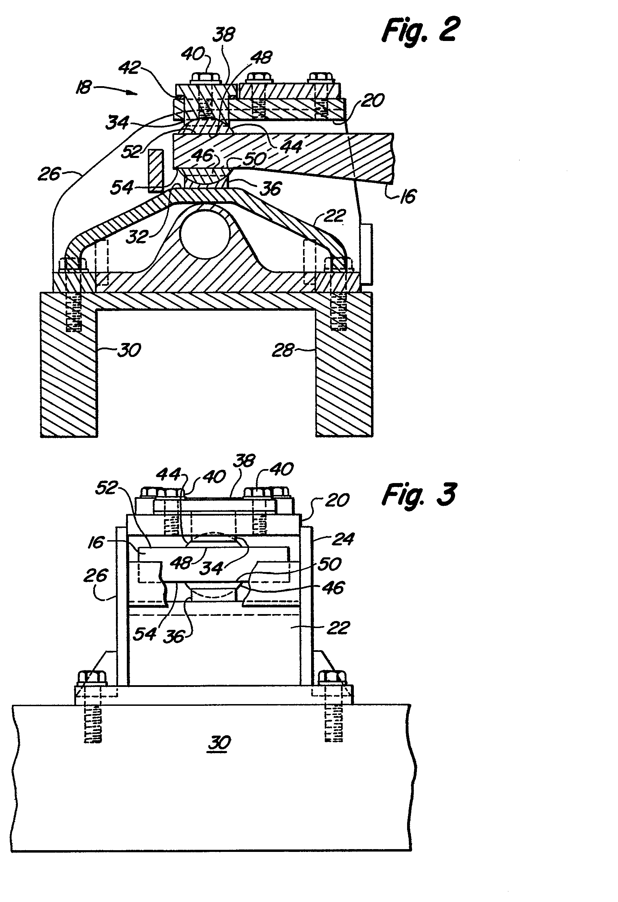

Das in den Figuren 2 und 3 dargestellte erste Ausführungsbeispiel für eine Halterung 18 weist ein oberes Auflager 20 und
im Abstand hiervon ein unteres Auflager 22 auf. Das obere Auflager 20 besteht im wesentlichen aus einem Blech, das sich horizontal zwischen den oberen Enden zweier Vertikalbleche 24,26
erstreckt, die in Längsrichtung des Fahrzeugs einen Abstand
voneinander aufweisen und sich über ein Paar quer und im Abstand zueinander verlaufenden Träger 28,30 des Gleiskettenrahmens 10 erstrecken. Das untere Auflager 22 ist bügelförmig
ausgebildet und erstreckt sich zwischen den Vertikalblechen
24,26 und weist einen mittleren Horizontalabschnitt 32 auf.

Der Querträger 16 liegt mit seinem einen Ende mittig zwischen
dem oberen und unteren Auflager 20,22 und ist hier über ein
Kugellager festgelegt. Letzteres besteht aus einer oberen und
unteren, einander zugewandten Kugelsegmentpfanne 34,36, die
jeweils am oberen und unteren Auflager 20,22 befestigt sind,
wobei die untere Kugelsegmentpfanne 36 einteilig mit dem Horizontalabschnitt 32, beispielsweise durch Verschweißung, ausgebildet sein kann, während die obere Kugelsegmentpfanne 34
einteilig mit einem Halter 38 ausgebildet ist, der durch eine
Öffnung im oberen Auflager 20 verschiebbar geführt ist, auf
letzterem aufliegt und am oberen Auflager höhenverstellbar be-

- 8 -

festigt ist. Diese Höhenverstellung besteht aus einer vorderen und hinteren Schraube 40, die durch den Halter 38 geführt und in das obere Auflager 20 eingeschraubt sind, zwischen denen auf die Schrauben 40 gesteckte Zwischenlegscheiben 42 angeordnet sind. Dadurch läßt sich der Abstand zwischen den Kugelsegmentpfannen 34,36 zur Kompensation von Toleranzen und Verschleiß des Kugelgelenkes verhindern. Die Kugelsegmentpfannen 34,36 nehmen jeweils ein oberes und unteres Kugelsegment 44,46 auf, die mit ebenen Gleitflächen 48,50 versehen sind, die verschiebbar an parallelen, ebenen Flächen 52,54 an sich gegenüberliegenden Seiten des Querträgerendes anliegen.

Bei einer Verschwenkung des Gleiskettenrahmens 10 sowie des Querträgers 16 um die entsprechenden Verschwenkachsen bewegen sich die Kugelsegmente 44,46 universell innerhalb der Kugelsegmentpfannen 34,36, wobei sich das Ende des Querträgers 16 nach vorn und hinten sowie seitlich auf den ebenen Gleitflächen der Kugelsegmente verschiebt.

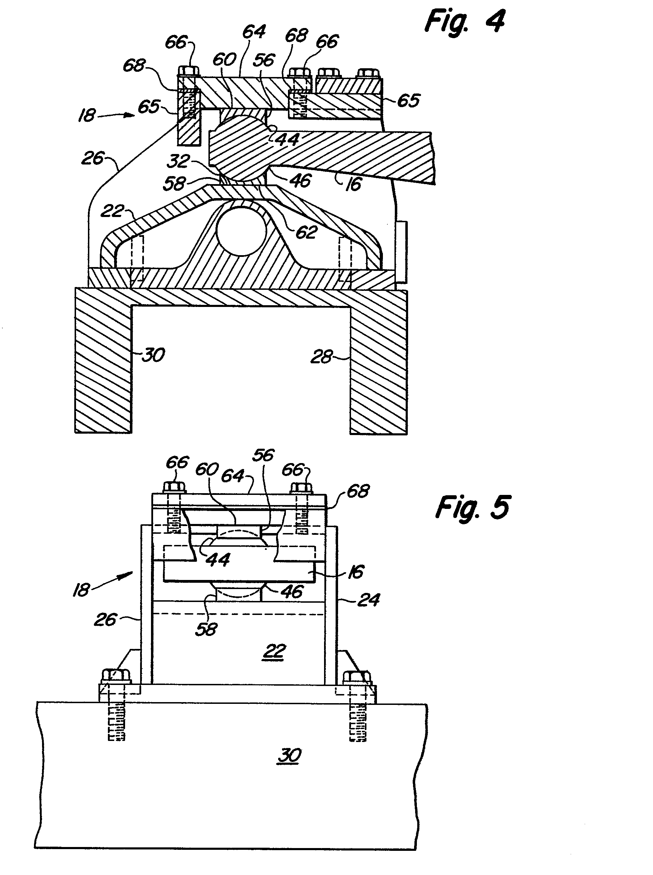

Die Figuren 4 und 5 zeigen ein zweites Beispiel für die Halterung 18, wobei gleiche Bezugszeichen gleiche Teile kennzeichnen. Bei dieser Ausführungsform sind die Kugelsegmente 44,46 mit dem Ende des Querträgers 16 verschweißt oder von vornherein einteilig mit ihm ausgebildet und werden in einer oberen und unteren Kugelsegmentpfanne 56,58 aufgenommen, die jeweils mit einer oberen bzw. unteren ebenen Gleitfläche 60,62 versehen sind, die verschiebbar an ebenen Flächen einer oberen, an einem oberen Auflager 65 über Schrauben 66 lösbar befestigten Lagerplatte 64 sowie des mittleren Horizontalabschnittes 32 des unteren Auflagers 22 anliegen. Zwischen Lagerplatte 64 und oberem Auflager 65 sind Zwischenlegscheiben 68 vorgesehen, so daß sich der Höhenabstand zwischen La-

- 9 -

gerplatte 64 und unterem Horizontalabschnitt 32 verändern
läßt zur Kompensation von Toleranzen und Verschleiß. Ebenso
wie bei dem ersten Ausführungsbeispiel bewegen sich die Kugelsegmente 44,46 universell innerhalb der Kugelsegmentpfannen 56,58, wenn Gleiskettenrahmen 10 und Querträger 16 um
ihre Verbindungsachsen mit dem Hauptrahmen des Raupenschleppers verschwenken. Nun bewegen sich allerdings die Kugellagerteile zusammenmit dem Ende des Querträgers 16, wobei die Kugelsegmentpfannen 56,58 an der Lagerplatte 64 bzw. am unteren
Auflager 22 verschoben werden und dadurch eine relative Längs-
und Seitenverschiebung zwischen Querträger und Gleiskettenrahmen ermöglichen.

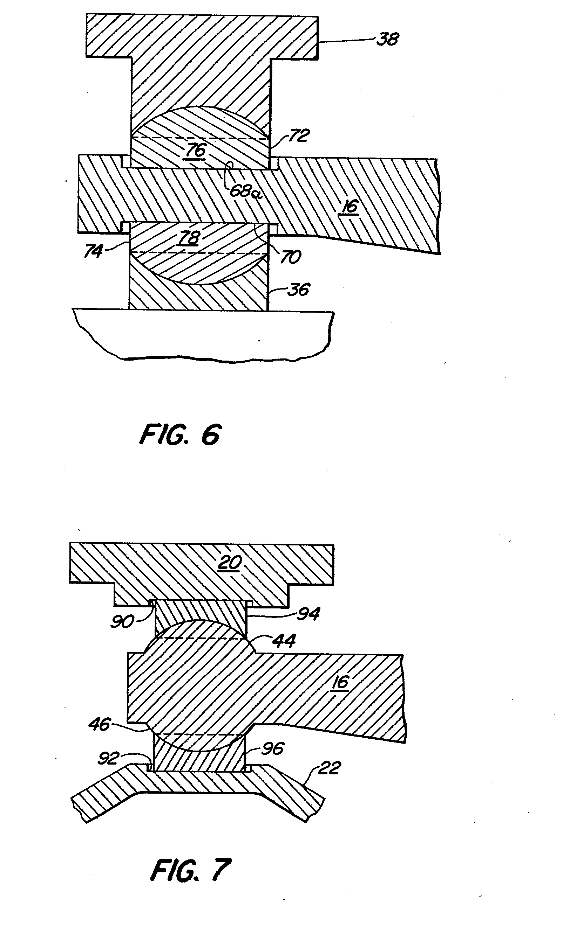

Figur 6 zeigt ein drittes Ausführungsbeispiel, das im Prinzip
dem der Figuren 2 und 3 entspricht, jedoch speziell geeignet
ist zur Aufnahme und Ableitung von seitlich auf den Gleiskettenrahmen einwirkenden Kräften. Das dargestellte Ende des
Querträgers 16 weist eine obere und untere zylindrische Ausnehmung 68a,70 auf, in die zylindrische Abschnitte 72,74 des
oberen und unteren Kugelsegmentes 76,78 lose eingreift. Der
Durchmesser der Ausnehmungen 68,70 ist etwas größer als der
der zylindrischen Abschnitte 72,74, so daß eine freie relative
Längsverschiebung zwischen den Kugelsegmenten und dem Querträgerende möglich, im Ausmaß aber begrenzt ist. Unter der
Einwirkung seitlicher Kräfte auf den Gleiskettenrahmen legen
sich die zylindrischen Abschnitte 72,74 gegen die zylindrische
Innenwandung der Ausnehmungen 68a,70 an, so daß die Seitenkräfte über den Hauptrahmen des Raupenschleppers auf dem gegenüberliegenden Gleiskettenrahmen übertragen werden. Dadurch
werden die Kräfte wesentlich reduziert, die sonst auf die beiden in Figur 1 dargestellten Diagonalstreben 80,82 einwirken
würden, die jeweils an einer Innenseite der Gleiskettenrahmen
10,12 befestigt sind und jeweils einen sich nach hinten erstreckenden Arm 84,86 aufweisen, der auf einer Welle 88 sitzt,

- 10 -

die auf der Achse 14 liegt.

Figur 7 zeigt ein viertes Ausführungsbeispiel, das im Prinzip dem der Figuren 4 und 5 entspricht, jedoch ebenfalls zur Ableitung seitlicher, auf den Gleiskettenrahmen wirkender Kräfte auf den gegenüberliegenden Gleiskettenrahmen geeignet ist. Im oberen und unteren Auflager 20,22 ist jeweils eine zylindrische Ausnehmung 90,92 vorgesehen, in die Kugelsegmentpfannen 94,96 mit einem zylindrischen Abschnitt lose eintauchen. Hinsichtlich der Wirkungsweise gilt das zu Figur 6 Gesagte.

Patentansprüche:

1. Halterung zur Verbindung des einen Endes eines Querträgers (16) eines Raupenschleppers mit einem Gleiskettenrahmen (10,12), g e k e n n z e i c h n e t
   durch folgende Merkmale:

   a) am Gleiskettenrahmen (10,12) sind obere und untere
      Auflager (20,22;64,65,22) befestigt, die oberhalb
      bzw. unterhalb von dem genannten Ende des Querträgers (16) liegen;

   b) zwischen dem genannten Querträgerende und dem genannten oberen und unteren Auflager (20,22;64,65,22) ist
      ein Kugelgelenk (44,46,34,36;56,58;76,78;94,96) vorgesehen;

   c) zwischen den Auflagern (20,22;64,65,22) und dem Ende
      des Querträgers (16) ist ein erstes Paar horizontaler
      ebener Gleitflächen (48,50) vorgesehen, die gegen ein
      zweites Paar ebener Gleitflächen (52,54;60,62) rela-
      tiv verschiebbar anliegen.

C110175

2. Halterung nach Anspruch 1, dadurch gekennzeichnet, daß das Kugelgelenk eine obere und untere, einander zugewandte Kugelsegmentpfanne (34,36) aufweist, die jeweils am oberen und unteren Auflager (20,22) befestigt sind und jeweils ein oberes und unteres Kugelsegment (44,46) aufnehmen, die mit dem genannten ersten Paar Gleitflächen (48,50) versehen sind, während das zweite Paar Gleitflächen (52,54) an sich gegenüberliegenden Seiten des Querträgerendes angeordnet ist.

3. Halterung nach Anspruch 2, dadurch gekennzeichnet, daß die obere Kugelsegmentpfanne (34) einteilig mit einem Halter (38) ausgebildet ist, der am oberen Auflager (20) höhenverstellbar befestigt ist.

4. Halterung nach Anspruch 3, dadurch gekennzeichnet, daß zur Höhenverstellung der oberen Kugelsegmentpfanne (34) Schrauben (40) vorgesehen sind, die durch den Halter (38) geführt und in das obere Auflager (20) eingeschraubt sind, zwischen denen auf die Schrauben (40) gesteckte Zwischenlegscheiben (42) angeordnet sind.

5. Halterung nach Anspruch 2, dadurch gekennzeichnet, daß das zweite Paar Gleitflächen durch den Boden von sich gegenüberliegenden, im Querträgerende vorgesehenen Ausnehmungen (68a,70) gebildet ist, in die die Kugelsegmente (76,78) lose mit einem Abschnitt (72,74) eintauchen, der das erste Paar Gleitflächen trägt.

6. Halterung nach Anspruch 1, dadurch gekennzeichnet, daß das Kugelgelenk eine obere und untere, einander zugewandte Kugelsegmentpfanne (56,58) aufweist, die mit das zweite Paar Gleitflächen bildenden Lagerflächen (60,62) gegen das erste Paar Gleitflächen bildende Lagerflächen am oberen und unteren Auflager (64,22) anliegen und jeweils ein oberes und unteres,fest mit dem Querträgerende verbundenes Kugelsegment (44,46) aufnehmen.

7. Halterung nach Anspruch 6, dadurch gekennzeichnet, daß die das erste Paar Gleitflächen bildenden Lagerflächen des oberen und unteren Auflagers (20,22) durch den Boden jeweils einer Ausnehmung (90,92) gebildet sind, in die die Kugelsegmentpfannen (94,96) lose mit einem Abschnitt eintauchen, der das zweite Paar Gleitflächen trägt.

8. Halterung nach einem der vorigen Ansprüche, dadurch gekennzeichnet, daß die Kugelsegmente (44,46;76,78) sowie die Kugelsegmentpfannen (34,36;56,58;94,96) einen gemeinsamen Krümmungsmittelpunkt aufweisen, der mittig zwischen der Ober- und Unterseite des Querträgerendes liegt.

Patentanwälte

G r a m m   +   L i n s

Gr/Fe

1/4

## Fig. 1

**Fig. 2**

**Fig. 3**

3/4

Fig. 4

Fig. 5

FIG. 6

FIG. 7